# EUROPEAN PATENT SPECIFICATION

(11) **EP 2 403 783 B1**
(45) Date of publication and mention of the grant of the patent: **11.09.2013**
(21) Application number: 10740249.7
(22) Date of filing: 01.03.2010
(51) Int. Cl.: B65G 17/26

(54) **PLANT FOR FEEDING GROUPS OF PRODUCTS TO A PACKAGING MACHINE**
ANLAGE FÜR DIE ZUFÜHRUNG VON PRODUKTGRUPPEN ZU EINER VERPACKUNGSMASCHINE
INSTALLATION PERMETTANT D'ALIMENTER UNE MACHINE DE CONDITIONNEMENT EN GROUPES DE PRODUITS

(30) Priority: 05.03.2009 IT MI20090327
(43) Date of publication of application: 11.01.2012
(73) Proprietor: Eurosicma S.p.A., 20125 Milano (IT)
(72) Inventor: REDAELLI, Marco, I-20060 Cassina de' Pecchi (IT)
(74) Representative: Cosenza, Simona
(86) International application number: PCT/IB2010/000417
(87) International publication number: WO 2010/100545

(56) References cited:
- EP-A1- 0 161 142
- WO-A-02/26601
- WO-A-88/05417
- WO-A-2008/022930
- DE-A1- 10 361 572
- JP-A- 2007 230 751

## Description

The present invention relates to a plant according to the preamble of claim 1, for feeding groups of food products in sequence to a packaging machine, such as flow-pack or the like.

In plants for feeding packaging machines there is often the need of moving the products along two directions at a right angle, transferring them from one direction to the other while they are kept in a suitable group that must be packaged. For example, this may be needed in order to adapt the speed of arrival of the products to the speed of the packaging machine and/or the arrangement and the spacing of the products and of the groups of products. A typical situation is that of the packaging of biscuits, crackers or the like in piles or groups lined up and arranged side by side.

The operating speeds and the fragility of the food products make the set of transfer operations difficult. Systems with paddles or movable barriers are known, but often the return movement of the paddles hinders or slows down the plant operation, for example interfering with the movement of one or both conveyors.

The international application WO-A-88/05417 describes a plant with paddles that are movable along a closed looped path, so as to alternately constitute the rear thruster of a product or the front counter-thruster of the next product.

The international application WO-A-02/26601 discloses a plant according to the preamble of claim 1.

The general object of the present invention is to obviate the above disadvantages by providing a feeding plant which should be fast, efficient and of reasonably limited cost and complexity.

In view of such object, it was thought to provide, according to the invention, a plant for feeding food products in sequence to a packaging machine according to claim 1.

To make the description of the innovative principles of the present invention and the advantages thereof relative to the prior art clear, a possible exemplary embodiment applying such principles is described hereinafter with reference to the annexed drawings. In such drawings:
- figure 1 shows a schematic side elevation view of a feeding plant according to the present invention;
- figure 2 shows a partially cutaway view in a cross plane of the plant of figure 1;
- figures 3 to 11 show schematic views of an operating sequence of the plant of figure 1;
- figures 12 and 13 show views similar to those of figures 1 and 2 for an embodiment version of the plant;
- figures 14 and 15 respectively show a schematic side elevation view and a corresponding cross section view of another feeding plant made according to the invention.

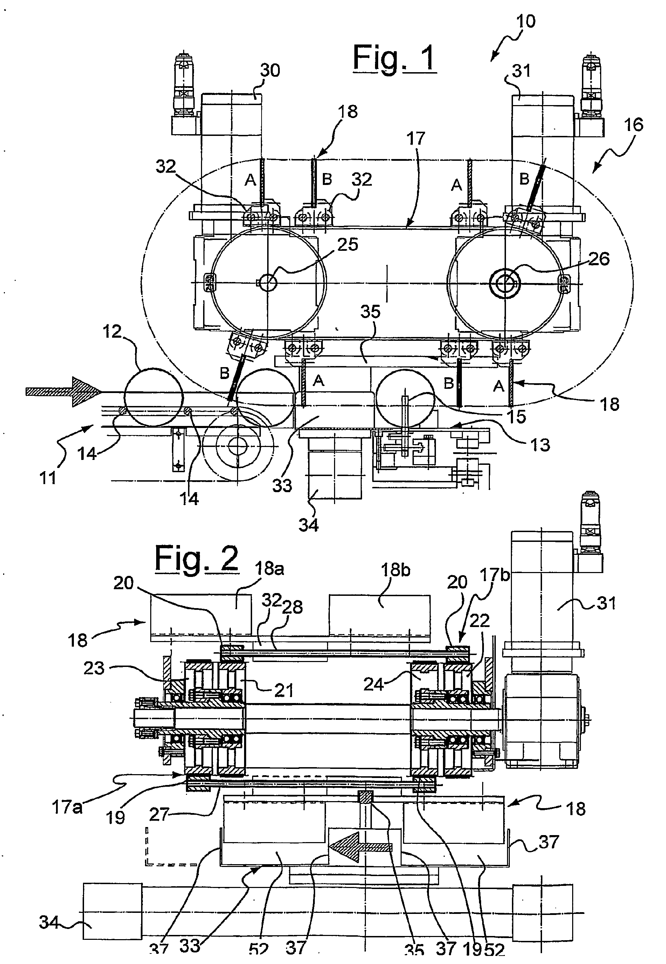

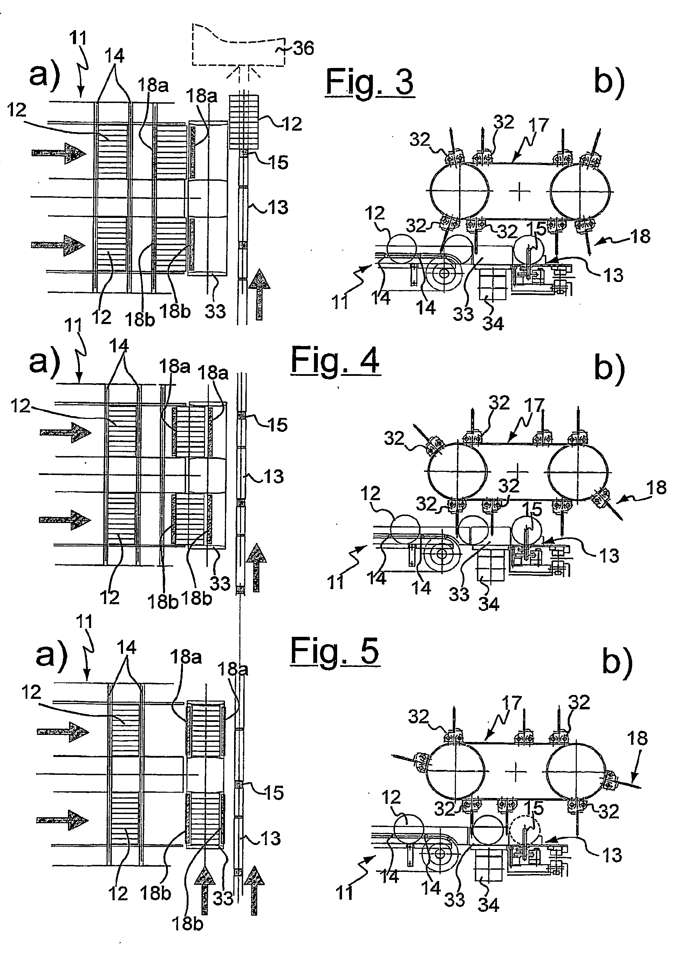

With reference to the figures, figure 1 schematically shows a plant, generally indicated with reference numeral 10, for feeding groups of products to a known packaging machine (schematically indicated with reference numeral 36 in figure 3a).

The plant comprises an input conveyor 11 for the arrival of products 12 and an output conveyor 13 for discharging groups of products in a crosswise direction relative to that of arrival. A transfer device 16 is provided between the two conveyors.

In the plant shown in figure 1, products 12 are biscuits or the like, fed in groups of vertically lined up products arranged side by side, and the input conveyor 11 is of a known type forming a feeding bench with slats 14. In the plant described, the groups of products (each representing a portion to be packaged) advance in flanked pairs, forming two feeding channels towards the transfer device 16. For this reason, device 16 is dual.

The two flanked groups must be inserted into two sequentially aligned positions along the output conveyor.

The groups of products that advance (at a constant speed) on the input conveyor must be inserted between thrusters 15 of the output conveyor 13 forming an input bench of a known flow-pack packaging machine. The packaging machine bench has a transversal direction relative to the moving direction of conveyor 11.

Thrusters 15 generally move at a high and constant speed and the transfer device 16 must transfer the groups of products minimizing the shocks due to the sudden change in direction, which such products undergo.

For the guided transfer, device 16 comprises belt moving devices 17 that move paddle elements 18. In particular, the paddles have an active transfer path of the products between a pick up point downstream of the input conveyor 11 and a delivery point in the output conveyor 13. Along the active path, the paddles are hanging over the product transfer zone between the conveyors.

As is clear also from figure 1, the paddles are used in pairs for arranging one in front and one behind each group of products to be moved along the transfer path.

As is visible in figure 2, and as will be better explained hereinafter, the belt moving devices 17 are two separate belt moving devices, i.e. a belt moving device 17a for one paddle in the pair and a belt moving device 17b for the other paddle in the pair. The two moving devices are parallel and independently motorized with motors 30, 31 (advantageously, brushless motor reduction units) and the motor control is suitably synchronized by a per se known control unit (not shown).

As will be clear hereinafter, thanks to the independent movement of the two paddles in each pair it is possible to form the pairs at the start of the movement path.

At the end of the product movement path, the two paddles of the pairs can be separated. The paddles alternately become either rear thruster or front counter-thruster of a pair.

The front paddle (in the movement direction of the products) proceeds in its movement direction for following the looped path of the respective moving device and then going back to the start of the movement zone as rear thruster paddle of a subsequent group of products. The rear paddle, on the other hand, pulls back to become the front paddle for the subsequent group of products at the start of the movement path.

Any interference is thus prevented, and the plant movements are simplified and speeded up.

Advantageously, the transfer device 16 also comprises a shuttle 33 that is movable in a limited manner in a direction parallel to the output conveyor 13 by means of a linear actuator 34 (advantageously with brushless motor).

The shuttle has such dimensions as to contain, support and separately guide the two portions of products fed in parallel by the slat bench 11.

In particular, for each channel, the shuttle has side containment walls 37 (in crosswise direction relative to the arrival direction on bench 11) of the group of products between which the paddles are received, which move in the product transfer path.

With reference to figure 2, in the first exemplary embodiment of the principles of the invention, each moving system or unit 17a and 17b in turn comprises a pair of parallel toothed belts, respectively 19 and 20. Each pair winds around respective toothed pulleys 21, 22 and 23, 24, which are arranged coaxial at the two ends of the motion path formed by the paddles. The pulleys of each end are mounted on a corresponding motorized coaxial shaft 25 or 26.

Shafts 27, 28 are fixed between the two belts that make up the pair moved by the same motor, and slidingly support the paddles, advantageously positioned in a sequence at constant pitch along the extension of the belts themselves.

Therefore, there are two groups of paddle elements: group 'A' driven by motor 30 and group 'B' driven by motor 31.

Elements A and B are arranged in alternating positions along the belt perimeter.

Each paddle is supported on the shafts by a respective trolley 32 that allows sliding along the shafts, but not a rotation. To this end, the shafts may have a suitably shaped section or, as visible in the figures, they may be used in pairs for each trolley.

As visible again in figure 2, in the embodiment with two parallel channels 52 of arrival of the products, the paddles are advantageously divided into paddles 18a and 18b to simultaneously act on the products arriving from both channels, using a same moving device.

Thanks to the moving device system with the cross shafts and the trolleys, the paddle thrusters move, controlled by the motor reduction units, in a direction that is parallel to the input conveyor 11 (and thus, perpendicular to conveyor 13), but they may also slide by a limited extent in a direction parallel to conveyor 13.

The linear actuator 34 moves the shuttle in a direction parallel to conveyor 13 directed towards the packaging machine. The shuttle may slide on linear guides with a good stiffness and is capable of having acceleration up to reaching the speed of the thrusters of conveyor 13, so as to allow transferring of the products between them with minimal shock.

A linear cam 35 of suitable length is fixed to the shuttle so that when the paddle thrusters are in the bottom horizontal movement stroke they engage the cam. When the shuttle translates, the paddles engaged with the cam therefore follow the movement of the shuttle and translate laterally together with the shuttle itself.

The combination of two perpendicular movements accompanying the products, provided for by the paddles and by the shuttle respectively, is obtained in this way. In the central accompanying step, the group of products is confined on the four sides, thanks to the paddles and the shuttle walls. Sliding of products is reduced by the fact that the side translation takes place within the shuttle, which forms the bottom of the support surface of the moving group of products.

Figures 3 to 11 show an advantageous transfer sequence from the input conveyor to the output conveyor. The figures indicated with a) show a schematic top view and the figures indicated with b) show a schematic side view.

At the start of the sequence (figure 3), a pair of paddles picks up the (or each) group of products coming from the input conveyor, while the shuttle is aligned therewith. Continuing the paddle motion, the products start being introduced in the shuttle (figure 4). Once the introduction is complete (figure 5), the group of products is confined on the four sides by the paddles and by the relative shuttle walls. The shuttle can thus start the translation in the moving direction of the output conveyor to synchronize therewith.

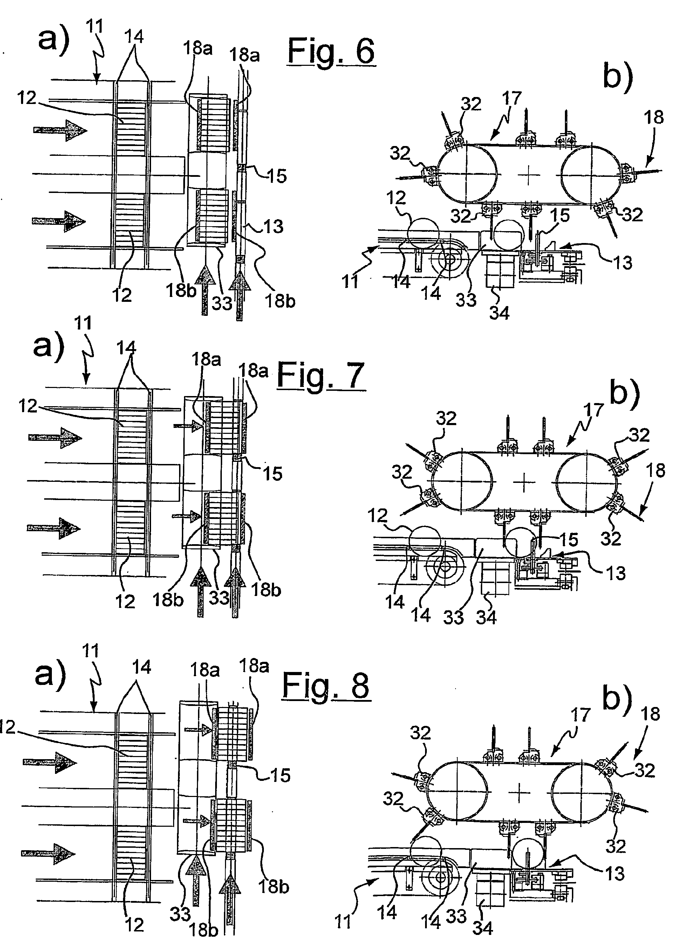

During the synchronization movement, the paddles continue the stroke while they are laterally pulled by the shuttle to move therewith, so as to start the products ejection towards the output conveyor 13 (figure 6).

The final part of the transfer in the output conveyor 13 of the flow-pack machine takes place at a programmable longitudinal advancing speed (up to being equal to the flow-pack chain speed) so as to prevent the violent impact of the products with the thruster of the output conveyor 13 when the products enter the conveyor (figures 7 and 8).

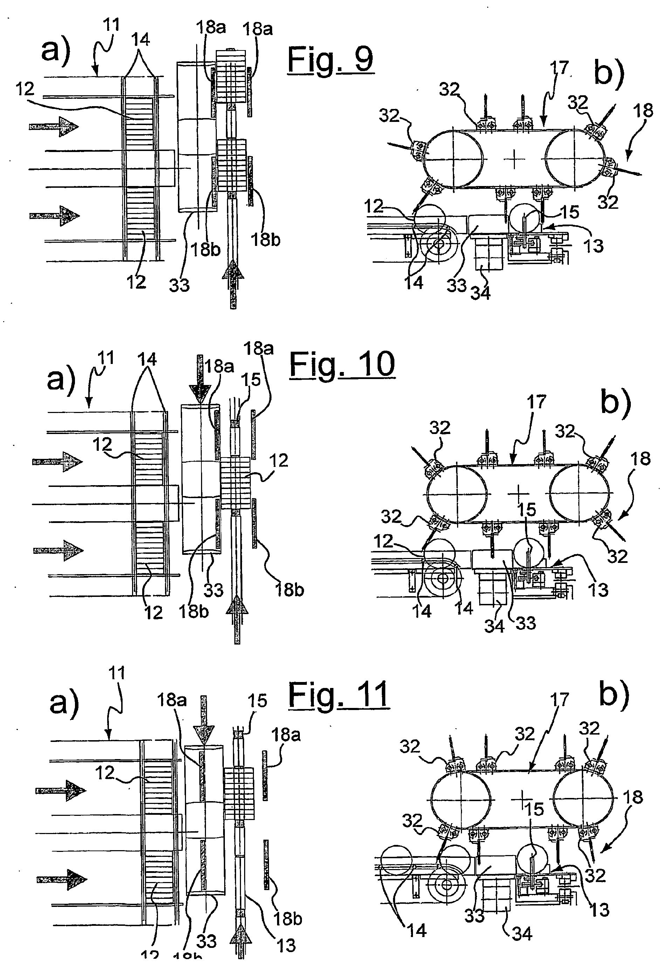

The paddle movement continues up to the complete insertion of products into conveyor 13 and the abandonment of the shuttle (figure 9). The two groups of products are then carried towards the packaging machine, while two more groups of products are arriving from the input conveyor.

While the output conveyor completes the product discharge, the shuttle returns to the starting position, bringing the paddles back to align with the product arrival channels (figure 10). The front paddle continues the movement to return (after a certain number of sequences) to the starting position as rear thruster of a subsequent pair of paddles. At the same time, the paddle that was rear thruster pulls back, so as to become the front counter-thruster of the subsequent pair of paddles (figure 11).

Device 16 therefore returns to the initial condition of figure 3 and the two new groups of products arrived from the input conveyor can be picked up and carried towards the output conveyor, repeating the same sequence described above.

Thanks to the principles of the invention, it is possible to minimize the distance between products transferring from the slat bench to the flow-pack conveyor (in the example it is about 150 mm).

Moreover, the transfer can take place with a control of optimized accelerations and maximum speeds adopting the best compromise of combination of the transversal and longitudinal advancing speed. This allows obtaining the softest possible combination for every single format ("soft transfer" system).

The movement (in the example with a stroke of around 150 mm) that is transversal to the output conveyor takes place controlling the group of products both in the thrust and in the stop step, so that the group deceleration does not generate the launch and detachment of the group itself but its speed gradually decreases by the counter-thruster formed by the front paddle.

The longitudinal transfer (that is, in the accompanying direction with the chain/conveyor of the flow-pack) takes place by the suitable plane of the sliding shuttle and with the containment walls thereof, so that the group of products is contained from the base and almost by the entire product height, not just by a portion from the top (generally, only by half the height in other systems). Moreover, the platform whereon the products rest, moving integrally with the walls, prevents frictions of the product base and eliminates the natural tendency of the products to tilt. Other systems, that drag the products encapsulating them from the top on the four sides and by half height only, in addition to the rubbing to the product base cause greater deterioration and greater dirt deposits, especially for chocolate-coated products. Moreover, known systems that encapsulate from the top are not as suitable for very short products or for products with a considerable dimensional irregularity or with non-flat faces (for example a convex face, such as the products called "Cake J1" in the field or the like).

In the plant described, all the movements of the translation device take place with the use of three motors (advantageously, brushless) controlled in electrical axis and they can be coordinated by the standard control unit of the packaging machine. All the format parameters may be stored.

The parts to be replaced for a format change are limited and very simple (shuttle walls, thruster and counter-thruster). Of course, several changes may be devised without departing from the scope of the invention.

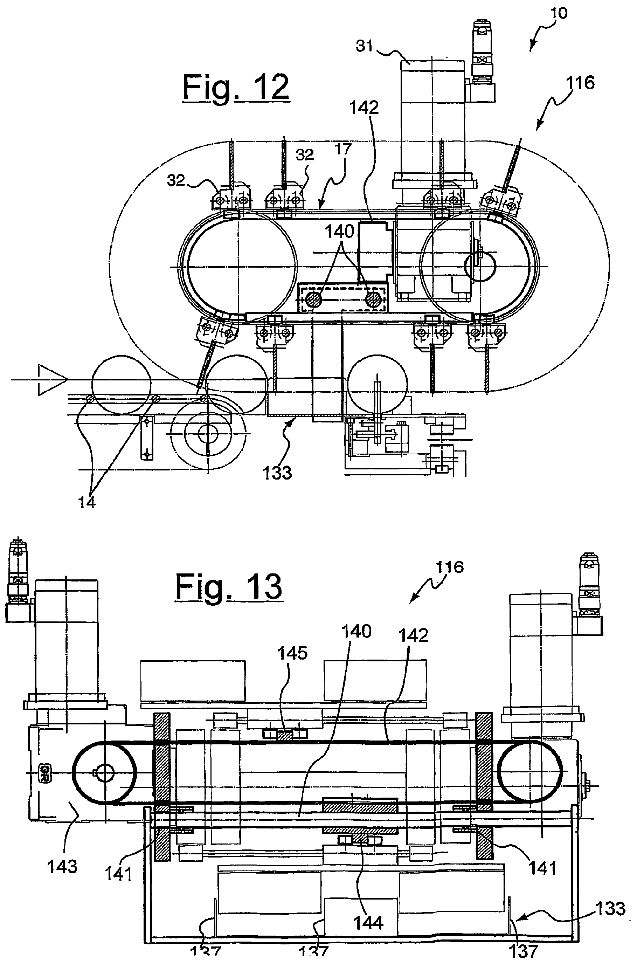

Figures 12 and 13 show an embodiment version according to which the shuttle (indicated with reference numeral 133) is structurally integrated with the top paddle moving system.

In such embodiment version (wherein the transfer device is indicated with reference numeral 116), the shuttle hangs on cross guides 140 arranged between the branches of the belt moving devices (substantially equal to those already described above and thus not described anymore) of the paddles. The guides slide in seats 141 of the frame of device 116. The shuttle is translated on the frame by a motorized unit that comprises a toothed belt 142 and a control motor 143. The bottom branch of belt 142 also moves a respective linear cam 144 that fits into the trolleys of the paddles travelling along the bottom branch (of product movement) of the paddle belt moving devices. In this way, the paddles in the bottom branch are translated along with the shuttle. After the repositioning of the paddles at the end of the transport stroke (similar to what already described above), the paddles that cover the rotation on the pulleys and the top return branch are advantageously guided by a cam 145 to remain in the correct position for the new cycle.

Alternatively, cam 145 may be moved by the top branch of belt 142.

This allows, for example, further speeding up the product transfer.

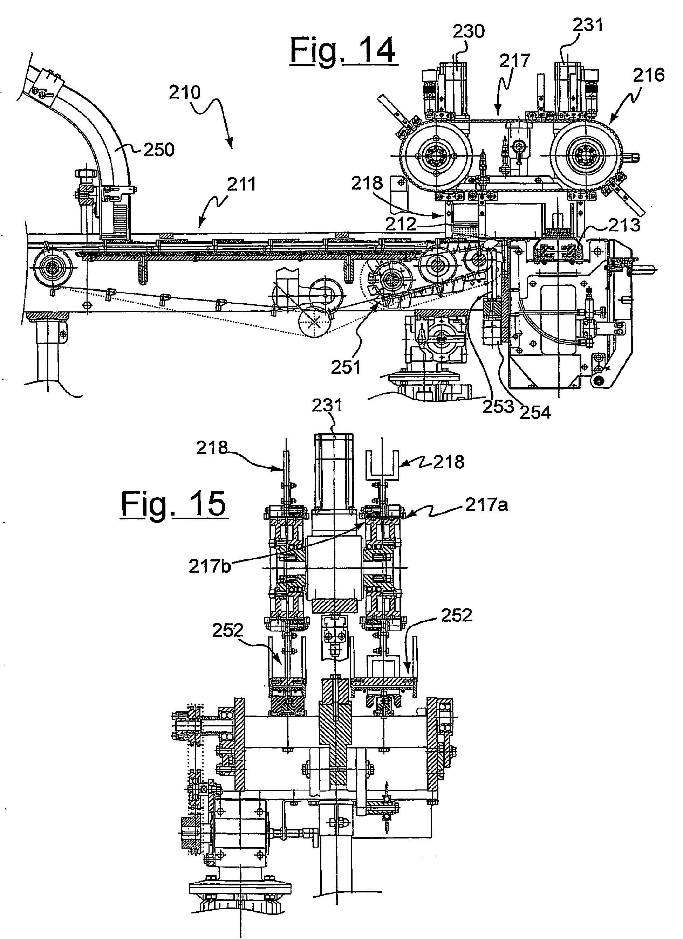

Figures 14 and 15 show another embodiment of a plant that applies the principles of the present invention for feeding food products to a known packaging machine.

In this embodiment, products such as cracker or biscuits are fed into groups of products vertically stacked rather than arranged horizontally side by side.

The plant shown treats two parallel rows of products in input to be laid on the output conveyor in a sequential line. For simplicity, the treatment of one row only will be described, the other row being treated in the same way and in parallel. The two channels operate together with the same motors.

The products are picked up from a vertical warehouse 250 through bottom extraction and advance in a line through chain thrusters that form an input conveyor 211 towards the transfer device 216.

Just before device 216 there is a stacker 251, substantially of known art, that stacks a predetermined number of arriving products, so as to constitute the group of products to be packaged as a stack of products 212. Stacker 251 for example consists of two series of chain lifting plates (width-adjustable) for inserting the subsequent products and forming the stack of products with the stack growing from the bottom.

An abutment 253 may be provided in the product lifting zone which is liftable by a pneumatic cylinder 254 (with a stroke, for example, of 20 mm) for stopping a certain number of products already stacked, awaiting the repositioning of the counter-thruster as will be clear hereinafter.

The feeding and lifting chains may be actuated by a motor reduction unit, with the possibility of adjusting the phase between feeder and lifter by a mechanical keyer.

The group of stacked products is picked up by device 216 by pairs of paddle elements 218 that guide the group of products between the side walls of a channel 252 up to the cross conveyor 213 that is directed to the input of the known packaging machine.

Since the stacked products have quite limited extension in the moving direction of the output conveyor 213, no movement shuttle is required in such direction, but the insertion speed obtained by the innovative paddle movement is sufficient.

As visible in figure 15, the transfer channels 252 may have a different width according to the product width dimensions. The moving paddles 218 shall consequently be made with a different width.

As visible for the paddles of the right channel, the paddles may also be constructed by suitably spaced fingers rather than as a continuous surface. This is advantageous, for example, for pushing and guiding rounded products.

As further visible in figure 15, the paddles forming the pairs are supported by respective toothed belt moving devices 217a and 217b. The two belts of the moving devices are independently motorized by motors 230, 231 (advantageously brushless motor reduction units) so as to obtain the alternating use of the paddles as thruster and counter-thruster, similar to what described for the previous embodiment. Therefore, for each pair it is possible to have the forward movement of the paddle that constitutes the front counter-thruster until it becomes the rear thruster of a subsequent pair of paddles, and the retrocession movement of the rear thruster until it becomes the front counter-thruster of the subsequent pair of paddles, as already described for the first embodiment.

As for the previous embodiment, at each transfer cycle the thrusters and counter-thrusters exchange function so as to prevent the crossing of the bench between one insertion cycle and the next one.

Arranging a plurality of paddles on each of the two belt moving devices (that is, groups 'A' and 'B' mentioned above), it is possible to optimize the speed and the time of the transport cycles, as it is sufficient to wait for the rear paddle of the pair that has ended the product transfer cycle to pull back to the position where it constitutes the front paddle of the subsequent pair of paddles, in cooperation with a paddle of the other group that now is rear paddle of the new pair. It is not necessary to wait for the front paddle of the first pair to complete the full revolution along the looped path since another paddle from the same group is already ready to be said rear paddle of the new pair.

A dual unit is shown in the plant described, provided with two feeding channels (for example, twelve meshes of a packaging machine pitch equal to 152.4 mm).

In a complete plant, the number of channels may vary for example between 2 and 12. It is also possible to consider, for example, a speed of 300 products a minute for each channel.

Advantageously, the overhead transfer unit consisting of the belt transfer device, may be constructed so as to be liftable to provide good accessibility to the underlying zone, for example for maintenance operations. The lifting may be manual with the aid of a gas spring. A pneumatic cylinder may be provided for locking the unit in working position.

Of course, the above description of embodiments applying the innovative principles of the present invention is given by way of an example of such innovative principles and should not therefore be taken as a limitation of the scope of protection claimed herein. Changes and/or further devices known to the man skilled in the art may be provided in the plant, according to the practical requirements. In the text, "belt moving device" is meant to include, besides the use of toothed belts, also chains, smooth belts, etc. The number of concurrent transfer channels of products may be varied from one to any number deemed suitable, as will be easily appreciated by the man skilled in the art. Several known systems may be used for making the products arrive in the desired position on the input conveyor. The conveyor may be constructed in one of many known shapes, too, according to the specific requirements.

The number of products in each group may of course be varied according to the practical requirements, up to having groups even with a single product (especially for products extending in a direction of the conveyors).

## Claims

1. Plant for feeding food products in sequence to a packaging machine, comprising a first input conveyor (11, 211) and a second output conveyor (13, 213) for conveying towards the packaging machine, with it being foreseen that, between first and second conveyor, there is a synchronized transfer device (16, 116, 216) of groups of products between the two conveyors, the transfer device (16, 116, 216) comprising two belt moving devices (17, 217) that are parallel and independently motorized to move in synchrony along a looped path, the moving devices moving paddle elements (18, 218) that alternatively form a rear thruster or a front counter-thruster of pairs of elements for receiving and transferring individual groups of products along a transfer path towards and into the output conveyor (13, 213), **characterized in that** the second conveyor (13, 213) is transversal to the first conveyor (11, 211) and **in that** each moving device (17, 217) is operatively associated with a sequence of paddle elements (18, 218) and wherein the plant comprises a control unit to control the moving devices (17, 217), such that the two moving devices are synchronized so as to cyclically form, with paddle elements (18, 218) of the respective sequences at the start of the transfer path, a rear thruster and front counter-thruster pair that receives a group of arriving products between them and transfers the products towards the output conveyor (13, 213), and at the end of the transfer path the element (18, 218) that forms the front counter-thruster proceeds along a return part of the looped path to go back to the start of the transfer path and become the rear thruster of a subsequent pair, and the element (18, 218) that forms the rear thruster of the pair pulls back along the transfer path to go back to the start and become the counter-thruster of the subsequent pair.

2. Plant according to claim 1, **characterized in that** it comprises a shuttle (33, 133) with side walls (37, 137), arranged along said transfer path and that slides parallel to the direction of movement of the second conveyor, said shuttle (33, 133) receiving between the side walls the thruster and counter-thruster pair (18, 118) that moves along the transfer path with a group of products and translating the pair and the group of products in it sideways in a direction parallel to the sliding direction of the second conveyor (13) so that as the movement of the pair proceeds towards the second conveyor the group of products is released onto the second conveyor with movement synchronized with the sliding of the second conveyor.

3. Plant according to claim 1, **characterized in that** the input conveyor (11) is adapted to convey a sequence of groups (12) of products lined up and arranged side by side that are received by the transfer device (16) to be transferred to the output conveyor (13).

4. Plant according to claim 1, **characterized in that** the input conveyor (211) is adapted to convey a sequence of individual products and between it and the transfer device (216) there is a stacker (251) that forms successive stacks of products (212) from the sequence of individual products, said stacks constituting the groups of products to be transferred towards the output conveyor (213).

5. Plant according to claim 2, **characterized in that** each belt moving device (17a, 17b) comprises two flanked belts (19 or 20) with transversal shafts (27, 28) between them that support the paddle elements (18) and that allow a translation of the elements along the shafts to follow the sliding movement of the shuttle (33).

6. Plant according to claim 2, **characterized in that** it comprises a linear cam (35) connected to the shuttle to move paddle elements present along the transfer path in synchrony with the sliding of the shuttle.

7. Plant according to claim 2, **characterized in that** it comprises a unit (142, 143) with motorized belt to move the shuttle (133), the belt (142) of the unit supporting a linear cam (144) to move, synchronously with a shuttle, also paddle elements present along the transfer path.

8. Plant according to claim 1, **characterized in that** it comprises on the input conveyor and in the transfer device two or more flanked channels (52, 252) for feeding products or groups of products to simultaneously release two or more groups of products in immediately successive positions along the second conveyor.

9. Plant according to claim 1, **characterized in that** the output conveyor has thrusters between which the groups of products must be inserted.

## Patentansprüche

1. Anlage zum aufeinanderfolgenden Zuführen von Lebensmittelprodukten zu einer Verpackungsmaschine, die einen ersten Eingangsförderer (11, 211) und einen zweiten Ausgangsförderer (13, 213) zum Fördern in Richtung der Verpackungsmaschine umfasst, wobei vorgesehen ist, dass sich zwischen dem ersten und dem zweiten Förderer eine synchronisierte Vorrichtung (16, 116, 216) für den Transfer von Produktgruppen zwischen den zwei Förderern befindet, wobei die Transfervorrichtung (16, 116, 216) zwei Bandbewegungsvorrichtungen (17, 217) umfasst, die parallel und für die synchrone Bewegung entlang einer endlosschleifenförmigen Bahn unabhängig angetrieben sind, wobei die Bewegungsvorrichtungen Schaufelelemente (18, 218) bewegen, die abwechselnd einen hinteren Schieber oder einen vorderen Gegenschieber aus Elementenpaaren zum Empfangen und Transferieren von einzelnen Produktgruppen längs eines Übergabewegs zum und in den Ausgangsförderer (13, 213) bilden, **dadurch gekennzeichnet, dass** der zweite Förderer (13, 213) quer zum ersten Förderer (11, 211) angeordnet ist, und dadurch, dass jede Bewegungsvorrichtung (17, 217) betriebsfähig mit einer Folge von Schaufelelementen (18, 218) verbunden ist, und wobei die Anlage eine Steuereinheit zum Steuern der Bewegungsvorrichtungen (17, 217) derart umfasst, dass die zwei Bewegungsvorrichtungen so synchronisiert werden, dass sie, wenn sich die Schaufelelemente (18, 218) der entsprechenden Folgen am Anfang des Übergabewegs befinden, zyklisch ein Paar aus einem hinteren Schieber und einem vorderen Gegenschieber bilden, das eine Gruppe von ankommenden Produkten zwischen diesen empfängt und die Produkte zum Ausgangsförderer (13, 213) transferiert, und dass am Ende des Übergabewegs das Element (18, 218), das den vorderen Gegenschieber bildet, seinen Weg entlang einem Rückkehrabschnitt der endlosschleifenförmigen Bahn fortsetzt, um zum Anfang des Übergabewegs zurückzukehren und der hintere Schieber eines darauffolgenden Paares zu werden, und dass sich das Element (18, 218), das den hinteren Schieber des Paares bildet, längs des Übergabewegs zurückzieht, um zum Anfang zurückzukehren und der Gegenschieber des darauffolgenden Paares zu werden.

2. Anlage nach Anspruch 1, **dadurch gekennzeichnet, dass** sie ein Schiffchen (33, 133) mit Seitenwänden (37, 137) umfasst, das längs des Übergabewegs angeordnet ist und parallel zur Bewegungsrichtung des zweiten Förderers gleitet, wobei dieses Schiffchen (33, 133) zwischen den Seitenwänden das Schieber- und Gegenschieberpaar (18, 118) aufnimmt, das sich längs des Übergabewegs mit einer Produktgruppe bewegt, und das Paar und die Produktgruppe in ihm seitwärts in einer zur Verschieberichtung des zweiten Förderers (13) parallelen Richtung so verschiebt, dass die Produktgruppe mit sich fortsetzender Bewegung des Paars zum zweiten Förderer hin mit einer mit der Verschiebung des zweiten Förderers synchronisierten Bewegung auf den zweiten Förderer abgegeben wird.

3. Anlage nach Anspruch 1, **dadurch gekennzeichnet, dass** der Eingangsförderer (11) geeignet ist, eine Folge von ausgerichteten und nebeneinander angeordneten Produktgruppen (12) zu befördern, die von der Transfervorrichtung (16) entgegengenommen werden, um zum Ausgangsförderer (13) transferiert zu werden.

4. Anlage nach Anspruch 1, **dadurch gekennzeichnet, dass** der Eingangsförderer (211) geeignet ist, eine Folge von einzelnen Produkten zu befördern, und dass sich zwischen ihm und der Transfervorrichtung (216) ein Stapler (251) befindet, der aufeinanderfolgende Produktstapel (212) aus der Folge von einzelnen Produkten bildet, wobei diese Stapel die zum Ausgangsförderer (213) zu transferierenden Produktgruppen bilden.

5. Anlage nach Anspruch 2, **dadurch gekennzeichnet, dass** jede Bandbewegungsvorrichtung (17a, 17b) zwei benachbarte Bänder (19 oder 20) mit Querwellen (27, 28) zwischen ihnen umfasst, welche die Schaufelelemente (18) tragen und eine Verschiebung der Elemente längs der Wellen ermöglichen, um der Gleitbewegung des Schiffchens (33) zu folgen.

6. Anlage nach Anspruch 2, **dadurch gekennzeichnet, dass** sie einen Linearnocken (35) umfasst, der mit dem Schiffchen verbunden ist, um die auf dem Übergabeweg sich befindlichen Schaufelelemente synchron mit dem Gleiten des Schiffchens zu bewegen.

7. Anlage nach Anspruch 2, **dadurch gekennzeichnet, dass** sie eine Einheit (142, 143) mit einem angetriebenen Band zum Bewegen des Schiffchens (133) umfasst, wobei das Band (142) der Einheit einen Linearnocken (144) trägt, um synchron mit einem Schiffchen auch Schaufelelemente zu bewegen, die sich längs des Übergabewegs befinden.

8. Anlage nach Anspruch 1, **dadurch gekennzeichnet, dass** sie auf dem Eingangsförderer und in der Transfervorrichtung zwei oder mehrere benachbarte Kanäle (52, 252) zum Zuführen von Produkten oder Produktgruppen umfasst, um gleichzeitig zwei oder mehrere Produktgruppen in unmittelbar aufeinanderfolgenden Positionen entlang dem zweiten Förderer abzugeben.

9. Anlage nach Anspruch 1, **dadurch gekennzeichnet, dass** der Ausgangsförderer Schieber aufweist, zwischen die die Produktgruppen eingeführt werden müssen.

## Revendications

1. Installation pour alimenter une machine de conditionnement en séquence avec des produits alimentaires, comprenant un premier convoyeur d'entrée (11, 211) et un deuxième convoyeur de sortie (13, 213) pour le transport vers la machine de conditionnement, étant prévu avec ceci que, entre les premier et deuxième convoyeurs, un dispositif de transfert synchronisé (16, 116, 216) de groupes de produits entre les deux convoyeurs soit prédisposé, le dispositif de transfert (16, 116, 216) comprenant deux dispositifs de déplacement par courroie (17, 217) qui sont parallèles et motorisés indépendamment pour se déplacer en synchronisme le long d'un parcours en boucle, les dispositifs de déplacement déplaçant des éléments à palette (18, 218) qui forment alternativement un pousseur arrière ou un contre-pousseur avant de paires d'éléments pour recevoir et transférer des groupes de produits individuels le long d'un trajet de transfert vers et dans le convoyeur de sortie (13, 213), **caractérisée en ce que** le deuxième convoyeur (13, 213) est transversal par rapport au premier convoyeur (11, 211) et **en ce que** chaque dispositif de déplacement (17, 217) est associé fonctionnellement à une séquence d'éléments à palette (18, 218) et dans lequel l'installation comprend une unité de commande pour commander les dispositifs de déplacement (17, 217), de manière que les deux dispositifs de déplacement soient synchronisés afin de former cycliquement, avec des éléments à palette (18, 218) de séquences respectives au début du trajet de transfert, une paire de pousseur arrière et contre-pousseur avant qui reçoit un groupe de produits arrivants entre ceux-ci et transfère les produits vers le convoyeur de sortie (13, 213), et, à la fin du trajet de transfert, l'élément (18, 218) qui forme le contre-pousseur avant poursuit le long d'une partie de retour du parcours en boucle pour revenir au début du trajet de transfert et devenir le pousseur arrière d'une paire successive, et l'élément (18, 218) qui forme le pousseur arrière de la paire se déplace en arrière le long du trajet de transfert pour revenir au début et devenir le contre-pousseur de la paire successive.

2. Installation selon la revendication 1, **caractérisée en ce qu'**elle comprend une navette (33, 133) avec des parois latérales (37, 137), disposée le long dudit trajet de transfert et qui coulisse parallèlement à la direction de mouvement du deuxième convoyeur, ladite navette (33, 133) recevant entre les parois latérales la paire de pousseur et contre-pousseur (18, 118) qui se déplace le long du trajet de transfert avec un groupe de produits et faisant effectuer une translation à la paire et au groupe de produits dans celle-ci latéralement dans une direction parallèle à la direction de coulissement du deuxième convoyeur (13) de manière que lorsque le mouvement de la paire se poursuive vers le deuxième convoyeur, le groupe de produits est relâché sur le deuxième convoyeur avec un mouvement synchronisé avec le coulissement du deuxième convoyeur.

3. Installation selon la revendication 1, **caractérisée en ce que** le convoyeur d'entrée (11) est adapté pour acheminer une séquence de groupes (12) de produits alignés et disposés côte à côte qui sont reçus par le dispositif de transfert (16) pour être transférés au convoyeur de sortie (13).

4. Installation selon la revendication 1, **caractérisée en ce que** le convoyeur d'entrée (211) est adapté pour acheminer une séquence de produits individuels et **en ce que**, entre celui-ci et le dispositif de transfert (216), est prédisposé un empileur (251) qui forme des piles successives de produits (212) à partir d'une séquence de produits individuels, lesdites piles constituant les groupes de produits à transférer vers le convoyeur de sortie (213).

5. Installation selon la revendication 2, **caractérisée en ce que** chaque dispositif de déplacement par courroie (17a, 17b) comprend deux courroies encadrées (19 ou 20) avec des arbres transversaux (27, 28) entre elles qui supportent les éléments à palette (18) et qui permettent une translation des éléments le long des arbres pour suivre le mouvement de coulissement de la navette (33).

6. Installation selon la revendication 2, **caractérisée en ce qu'**elle comprend une came linéaire (35) connectée à la navette pour déplacer des éléments à palette présents le long du trajet de transfert en synchronisme avec le coulissement de la navette.

7. Installation selon la revendication 2, **caractérisée en ce qu'**elle comprend une unité (142, 143) avec courroie motorisée pour déplacer la navette (133), la courroie (142) de l'unité supportant une came linéaire (144) pour déplacer également, de manière synchronisée avec une navette, des éléments à palette présents le long du trajet de transfert.

8. Installation selon la revendication 1, **caractérisée en ce qu'**elle comprend, sur le convoyeur d'entrée et dans le dispositif de transfert, deux ou plusieurs canaux encadrés (52, 252) pour alimenter des produits ou des groupes de produits pour relâcher simultanément deux ou plusieurs groupes de produits dans des positions immédiatement successives le long du deuxième convoyeur.

9. Installation selon la revendication 1, **caractérisée en ce que** le convoyeur de sortie a des pousseurs entre lesquels les groupes de produits doivent être insérés.
